# FASCICULE DE BREVET EUROPEEN

(11) **EP 1 054 749 B1**
(45) Date de publication et mention de la délivrance du brevet: **21.05.2003**
(21) Numéro de dépôt: 99901683.5
(22) Date de dépôt: 02.02.1999
(51) Int. Cl.: B23K 11/31

(54) **PINCE A SOUDER ELECTRIQUE COMPORTANT UN DISPOSITIF D'INDEXAGE ET DE DESINDEXAGE MECANIQUE**
WIDERSTANDSCHWEISSZANGEN MIT EINER MECHANISCHEN TEILUNGS- UND RÜCKSETZVORRICHTUNG
ELECTRICAL WELDING CLAMP COMPRISING A MECHANICAL DEVICE FOR INDEXING AND DE-INDEXING

(30) Priorité: 02.02.1998 FR 9801153
(43) Date de publication de la demande: 29.11.2000
(73) Titulaire: Menage, Christine, 92200 Neuilly-sur-Seine (FR); Dawidowicz, Armand, 92200 Neuilly-sur-Seine (FR); Beffrieu, Michel, 93460 Gournay (FR)
(72) Inventeur: BEFFRIEU, Michel, F-93460 Gournay (FR); DE BRUYN, Gérard, F-92160 Gournay (FR); RICART, Jean-Luc, F-75014 Paris (FR)
(74) Mandataire: Dawidowicz, Armand
(86) Numéro de dépôt international: FR9900208
(87) Numéro de publication internationale: WO99038640

(56) Documents cités:
- FR-A- 2 255 136
- FR-A- 2 490 128

## Description

La présente invention concerne une pince à souder électrique comportant un dispositif permettant l'indexage et le désindexage, c'est-à-dire le verrouillage et le déverrouillage du mouvement de la pince, par exemple la rotation dans le cas d'une pince en X ou la translation dans le cas d'une pince en J, par rapport à son support, par exemple un bras d'un robot sur lequel ladite pince est montée.

Un cycle de soudage se décompose en trois phases : accostage, soudage et dégagement. Lors de la phase de soudage, une pince à souder doit pouvoir admettre un mouvement, par exemple d'ouverture et de fermeture, par rapport au robot afin de s'adapter aux tôles à assembler, en particulier lors de l'accostage qui correspond à l'insertion en superposition des deux pièces à souder entre les électrodes de la pince et à l'établissement d'un effort stabilisé des deux électrodes créant un circuit électrique.

Une fois le soudage effectué, la pince est ensuite ouverte et amenée par le robot vers un autre point de soudure à effectuer.

Au cours de ces déplacements, en particulier pour mettre en position la pince à souder par rapport aux tôles à assembler, le mouvement de la pince, qui est ouverte, peut s'avérer gênant et empêcher une trajectoire et un positionnement précis de l'ensemble. En effet, afin d'optimiser les temps de cycle du robot, celui-ci se déplace toujours sur ses différents axes au maximum de sa vitesse. De ce fait, lors d'accélérations données par le robot, la pince à souder tend à osciller.

Aussi, pour éviter les phénomènes d'inertie importants et que la pince tourne du fait des accélérations données par le robot, on verrouille momentanément le mouvement de l'ensemble de la pince par un système d'indexage. Aussi, la plupart des pinces à souder sont équipées d'un système d'indexage ayant une influence sur la pince lors de son déplacement d'un poste de travail à un autre par exemple.

Les pinces à souder à motorisation électrique généralement utilisées présentent un système d'indexage et de désindexage constitué par un vérin dont la position de tige sortie permet de bloquer la pince et dont la position de tige rentrée libère le mouvement de ladite pince afin de permettre l'auto-centrage des électrodes sur une tôle à assembler lors de l'accostage et ce, sans contrainte sur les tôles. Afin de favoriser l'auto-centrage, la pince comporte des ressorts d'équilibrage permettant d'amener la pince à une position d'équilibre autour de son plan de soudage.

Cependant, dans le cas de pinces à souder à motorisation électrique, la présence du vérin implique, en plus du circuit électrique de motorisation de la pince, la présence d'un circuit à air comprimé ainsi que tous les éléments qui en découlent, à savoir une canalisation, un compresseur, etc.

Il est donc nécessaire de prévoir deux types différents d'alimentations.

La présente invention vise en conséquence à pallier ces inconvénients en proposant une pince à souder à motorisation électrique dans laquelle le dispositif de verrouillage et de déverrouillage du mouvement de la pince à souder par rapport au plan de soudage, ne fait plus appel à une alimentation pneumatique, hydraulique et autres.

A cet effet, la présente invention a pour objet une pince à souder à motorisation électrique du type comportant un bras fixe indexé et un bras mobile, pourvus respectivement d'une électrode, ainsi qu'un dispositif d'indexage et de désindexage verrouillant et déverrouillant le mouvement de la pince par rapport au plan de soudage, caractérisée en ce que ledit dispositif d'indexage et de désindexage comporte des moyens mécaniques agencés pour assurer ledit verrouillage et ledit déverrouillage dudit mouvement de la pince, au cours des mouvements d'ouverture/fermeture de ladite pince, sous l'effet des moyens de commande électrique d'ouverture et de fermeture de la pince.

De ce fait, à la fin d'une phase de soudage, lors de l'ouverture de la pince par lesdits moyens de commande électrique, les moyens mécaniques agissent sur la pince de manière à l'indexer tandis qu'à l'inverse, un actionnement des moyens de commande électrique dans le sens d'une fermeture de la pince provoque l'entraînement des moyens mécaniques vers un désindexage de la pince.

Une pince à souder selon l'invention peut être aussi bien une pince en X qu'une pince en J.

Dans le cas d'une pince en X, selon une forme de réalisation préférée, les moyens mécaniques du dispositif d'indexage et de désindexage de la pince sont constitués d'une came, d'une bielle et d'un galet, la came étant montée rotative autour de son axe de fixation sur une oreille du bras voulu fixe de la pince, la bielle présentant une extrémité montée rotative autour de son axe de liaison avec la came, ledit axe de liaison étant parallèle à l'axe de fixation de la came et écarté de celui-ci, et une extrémité montée rotative autour d'un tourillon moteur dont l'axe longitudinal est également parallèle à l'axe de rotation de la came, ledit tourillon moteur étant lui-même en liaison à pivot glissant avec l'oreille du second bras de la pince voulu mobile, le galet étant quant à lui solidaire de l'articulation de la pince et propre à coopérer avec le profil de la came.

De préférence, le galet est monté, par l'intermédiaire d'un support du dispositif d'indexage, solidaire de l'articulation de la pince, l'axe du galet étant parallèle à l'axe de fixation de la came, ledit galet pouvant rouler le long du profil de came et ledit galet étant, en outre, monté coulissant par rapport à son support, le coulissement en translation étant limité par un moyen de rappel élastique tel qu'une pièce élastomère.

La came présente un profil défini par des rayons différents définissant différents diamètres de came et, lorsque le galet roule le long du plus grand diamètre de came, les bras de la pince ayant un mouvement de rotation autour de l'articulation de la pince s'indexent.

Une pince à souder selon l'invention ne présente donc plus qu'une seule alimentation électrique et il n'est donc plus besoin d'une alimentation pneumatique ou hydraulique pour le dispositif d'indexage et de désindexage. On supprime ainsi également tous les circuits et composants qui découlent d'une autre alimentation telle que pneumatique comme par exemple, les canalisations, un compresseur, etc.

De manière avantageuse, une pince à souder selon l'invention présente de plus une sécurité supplémentaire dans la mesure où, en cas d'absence d'énergie de la pince, la pince et en particulier le dispositif d'indexage et de désindexage reste en position et la pince reste manuellement utilisable.

De plus, on obtient une pince à souder dans laquelle la rapidité de l'indexage et du désindexage ne dépend pas de la vitesse d'un vérin mais de la vitesse du moteur électrique d'actionnement de la pince. En outre, le galet roulant sur la came confère une douceur à l'indexage contrairement à un vérin qui frappe le doigt.

On décrira maintenant l'invention plus en détail pour un exemple de réalisation sur une pince en X en référence au dessin annexé dans lequel :

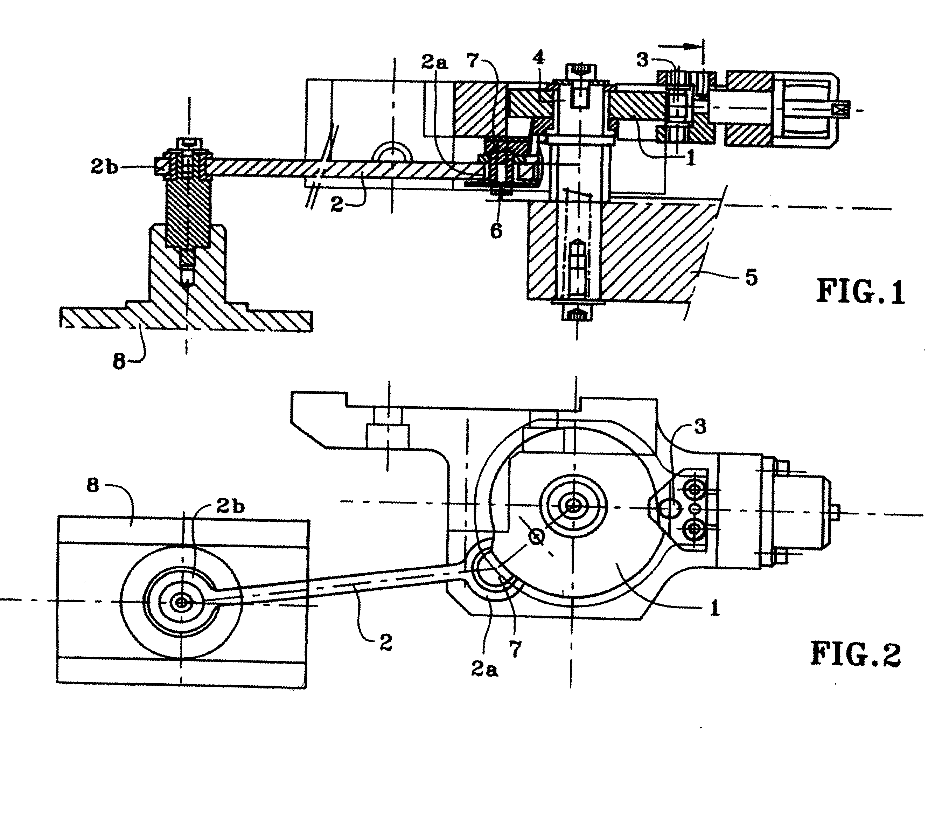

la figure 1 représente une vue en coupe latérale d'un dispositif d'indexage et de désindexage de la pince à souder selon l'invention et
la figure 2 représente une vue de dessus du dispositif selon la figure 1.

Dans le cas d'une pince à souder à motorisation électrique en X, celle-ci comporte un bras fixe indexé 5 et un bras mobile, le dispositif d'indexage ou de désindexage agit sur l'ensemble de la pince de manière à verrouiller ou non la rotation relative des bras.

Le dispositif d'indexage et de désindexage comprend une came 1, une bielle 2 et un système moyen de rappel élastique-galet 3.

L'oreille du support du bras 5 voulu fixe de la pince présente un doigt 4 constituant l'axe de la came 1 et sur lequel est montée rotative la came 1.

Une extrémité de la bielle 2 fonctionne avec ladite came 1 par l'intermédiaire d'une pièce de liaison 7 solidaire de la face inférieure de ladite came 1, de préférence au voisinage du bord périphérique de ladite came 1, et présentant un axe 6, parallèle au doigt 4, sur lequel l'extrémité 2a de la bielle 2 est montée rotative.

La seconde extrémité 2b de la bielle 2 est montée rotative autour d'un tourillon moteur 8 lequel est en liaison à pivot glissant avec l'oreille de l'autre bras de la pince voulu mobile.

Le tourillon moteur 8 est en général constitué par un écrou monté coulissant le long d'une vis accouplée au réducteur de la motorisation électrique de la pince.

Le galet 3 est monté, par l'intermédiaire d'un support du dispositif d'indexage, solidaire de l'articulation de la pince, l'axe du galet 3 étant parallèle à l'axe du doigt 4 sur lequel est montée la came 1, ledit galet 3 pouvant rouler le long du profil de came.

De plus, le galet 3 est monté coulissant par rapport à son support, le coulissement en translation étant limité par un moyen de rappel élastique tel qu'une pièce élastomère.

Lors de l'actionnement en ouverture de la pince, le tourillon 8 entraîne la bielle 2 qui imprime à la came 1 un mouvement de rotation. En fonction des différents diamètres de la came 1, le galet 3 roule sur ladite came 1. Les bras de la pince ayant un mouvement de rotation autour de l'articulation de la pince, ils s'indexent lorsque le galet 3 roule sur le plus grand diamètre de la came 1. Lors de la fermeture de la pince, c'est le mouvement inverse qui s'opère.

Ainsi, lorsqu'on ouvre la pince après une phase de soudage, ladite pince s'indexe dès lors que le bras mobile de la pince se trouve environ à 5 mm par rapport au plan théorique de soudage. De préférence, au début de l'indexage, la distance entre les électrodes est alors de 10 mm et à la fin de l'indexage de 15 mm. La pince reste indexée pendant l'ouvertur totale.

Le dimensionnement des différents éléments constituant le dispositif d'indexage et de désindexage est déterminé pour chaque taille de pince en fonction des précédentes valeurs d'intervalles voulues entre les électrodes de la pince.

## Revendications

1. Pince à souder à motorisation électrique du type comportant un bras fixe indexé (5) et un bras mobile, pourvus respectivement d'une électrode, ainsi qu'un dispositif d'indexage et de désindexage verrouillant et déverrouillant le mouvement de la pince par rapport au plan de soudage, **caractérisée en ce que** ledit dispositif d'indexage et de désindexage comporte des moyens mécaniques (1, 2, 3) agencés pour assurer ledit verrouillage et ledit déverrouillage dudit mouvement de la pince, au cours des mouvements d'ouverture/fermeture de ladite pince, sous l'effet des moyens de commande électrique d'ouverture et de fermeture de la pince.

2. Pince à souder selon la revendication 1,
**caractérisée en ce que** la pince à souder est une pince en J.

3. Pince à souder selon la revendication 1,
**caractérisée en ce que** la pince à souder est une pince en X.

4. Pince à souder selon la revendication 3,
**caractérisée en ce que** les moyens mécaniques du dispositif d'indexage et de désindexage de la pince sont constitués d'une came (1), d'une bielle (2) et d'un galet (3), la came (1) étant montée rotative autour de son axe de fixation sur une oreille du bras voulu fixe (5) de la pince, la bielle (2) présentant une extrémité (2a) montée rotative autour de son axe de liaison (6) avec la came (1), ledit axe de liaison (6) étant parallèle à l'axe de fixation de la came (1) et écarté de celui-ci, et une extrémité (2b) montée rotative autour d'un tourillon moteur (8) dont l'axe longitudinal est également parallèle à l'axe de rotation de la came (1), ledit tourillon moteur (8) étant lui-même en liaison à pivot glissant avec l'oreille du second bras de la pince voulu mobile, le galet (3) étant quant à lui solidaire de l'articulation de la pince et propre à coopérer avec le profil de la came (1).

5. Pince à souder selon la revendication 4,
**caractérisée en ce que** la came (1) présente différents diamètres, le plus grand diamètre de came correspondant à l'indexage de la pince.

6. Pince à souder selon l'une des revendications 4 et 5,
**caractérisée en ce que** l'axe de fixation de la came (1) est constitué par un doigt (4) solidaire de l'oreille du bras voulu fixe (5) de la pince.

7. Pince à souder selon l'une des revendications 4 à 6,
**caractérisé en ce que** l'extrémité (2a) de la bielle (2) coopère avec la came (1) par l'intermédiaire d'une pièce de liaison (7) solidaire de la face inférieure de la came (1) et présentant un axe (6) sur lequel l'extrémité (2a) est montée rotative.

8. Pince à souder selon l'une des revendications 4 à 7,
**caractérisée en ce que** le galet (3) est monté, par l'intermédiaire d'un support du dispositif d'indexage, solidaire de l'articulation de la pince, l'axe du galet (3) étant parallèle à l'axe de fixation de la came (1), ledit galet (3) pouvant rouler le long du profil de came (1) et ledit galet (3) étant, en outre, monté coulissant par rapport à son support, le coulissement en translation étant limité par un moyen de rappel élastique.

9. Pince à souder selon l'une des revendications 4 à 8,
**caractérisée en ce que** le tourillon moteur (8) est constitué par un écrou monté coulissant le long d'une vis accouplée au réducteur de la motorisation électrique de la pince.

## Patentansprüche

1. Schweißzange mit elektrischem Antrieb, umfassend einen gerasterten ortsfesten Arm (5) und einen beweglichen Arm, die jeweils mit einer Elektrode versehen sind, sowie eine Teilungs- und Rücksetzvorrichtung, welche die Bewegung der Schweißzange bezogen auf die Schweißebene sperrt und freigibt,
**dadurch gekennzeichnet, daß** die besagte Teilungs- und Rücksetzvorrichtung mechanische Mittel (1, 2, 3) umfaßt, die so angeordnet sind, daß sie die besagte Sperrung und Freigabe der besagten Bewegung der Schweißzange im Verlauf der Öffnungs-/Schließbewegungen der besagten Schweißzange unter der Einwirkung der Mittel zur elektrischen Öffnungs- und Schließbetätigung der Schweißzange sicherstellen.

2. Schweißzange nach Anspruch 1,
**dadurch gekennzeichnet, daß** die Schweißzange eine J-förmige Zange ist.

3. Schweißzange nach Anspruch 1,
**dadurch gekennzeichnet, daß** die Schweißzange eine X-förmige Zange ist.

4. Schweißzange nach Anspruch 3,
**dadurch gekennzeichnet, daß** die mechanischen Mittel der Teilungs- und Rücksetzvorrichtung der Schweißzange aus einem Nocken (1), einer Gelenkstange (2) und einer Rolle (3) bestehen, wobei der Nocken (1) drehbar um seine Befestigungsachse an einer Nase des als ortsfest vorgesehenen Arms (5) der Schweißzange gelagert ist, während die Gelenkstange (2) ein Ende (2a) aufweist, das drehbar um seine Verbindungsachse (6) mit dem Nocken (1) gelagert ist, wobei die besagte Verbindungsachse (6) parallel zur Befestigungsachse des Nockens (1) verläuft und zu dieser beabstandet ist, sowie ein Ende (2b), das drehbar um einen Antriebszapfen (8) gelagert ist, dessen Längsachse ebenfalls parallel zur Drehachse des Nockens (1) verläuft, wobei sich der besagte Antriebszapfen (8) selbst in einer Gleitzapfenverbindung mit der Nase des als beweglich vorgesehenen zweiten Arms der Schweißzange befindet, während die Rolle (3) ihrerseits fest mit dem Gelenk der Schweißzange verbunden ist und mit dem Profil des Nockens (1) zusammenwirken kann.

5. Schweißzange nach Anspruch 4,
**dadurch gekennzeichnet, daß** der Nocken (1) unterschiedliche Durchmesser aufweist, wobei der größte Durchmesser des Nockens der Teilung der Schweißzange entspricht.

6. Schweißzange nach einem der Ansprüche 4 und 5,
**dadurch gekennzeichnet, daß** die Befestigungsachse des Nockens (1) aus einem Finger (4) besteht, der fest mit der Nase des als ortsfest vorgesehenen Arms (5) der Schweißzange verbunden ist.

7. Schweißzange nach einem der Ansprüche 4 bis 6,
**dadurch gekennzeichnet, daß** das Ende (2a) der Gelenkstange (2) mit dem Nocken (1) über ein Verbindungsteil (7) zusammenwirkt, das fest mit der Unterseite des Nockens (1) verbunden ist und eine Achse (6) aufweist, an der das Ende (2a) drehbar gelagert ist.

8. Schweißzange nach einem der Ansprüche 4 bis 7,
**dadurch gekennzeichnet, daß** die Rolle (3) über einen Träger der Teilungsvorrichtung fest mit dem Gelenk der Schweißzange verbunden gelagert ist, wobei die Achse der Rolle (3) parallel zur Befestigungsachse des Nockens (1) verläuft, wobei die besagte Rolle (3) am Profil des Nockens (1) entlang rollen kann und wobei die besagte Rolle (3) außerdem im Verhältnis zur ihrem Träger verschiebbar gelagert ist, wobei die geradlinige Verschiebung durch ein elastisches Rückstellmittel begrenzt wird.

9. Schweißzange nach einem der Ansprüche 4 bis 8,
**dadurch gekennzeichnet, daß** der Antriebszapfen (8) aus einer Mutter besteht, die an einer Schraube entlang verschiebbar gelagert ist, die an das Untersetzungsgetriebe des elektrischen Antriebs der Schweißzange gekoppelt ist.

## Claims

1. An electrically motorised welding clamp of the type comprising an indexed fixed arm (5) and a movable arm, provided with respective electrodes, as well as an indexing and de-indexing device blocking and unblocking the movement of the clamp relative to the welding plane, **characterized in that** the said indexing and de-indexing device comprises mechanical means (1, 2, 3) adapted to ensure the said locking and the said unlocking of the said movement of the clamp in the course of the opening/closing movements of the said clamp, under the action of electrical control means for opening and closing the clamp.

2. A welding clamp according to claim 1, **characterized in that** the welding clamp is a J clamp.

3. A welding clamp according to claim 1, **characterized in that** the welding clamp is an X clamp.

4. A welding clamp according to claim 3, **characterized in that** the mechanical means of the indexing and de-indexing device of the clamp are formed by a cam (1), a connecting rod (5) and a roller (3), the cam (1) being mounted to rotate about is mounting spindle on a lug of the required fixed arm (5) of the clamp, the connecting rod (2) having one end (2a) mounted to rotate about its axis of connection (6) to the cam (1), the said axis of connection (6) being parallel to and spaced from the mounting spindle of the cam (1), and an end (2b) mounting to rotate about a motor bearing (8) whose longitudinal axis as also parallel to the axis of rotation of the cam (1), the said motor bearing (8) being itself slidably and pivotally connected to the lug of the movable second arm of the required clamp, the roller (3) for its part being pivotally fixed to the articulation of the clamp and adapted to cooperate with the profile of the cam (1).

5. A welding clamp according to claim 4, **characterized in that** the cam (1) has different diameters, the greater diameter of the cam corresponding to the indexing of the clamp.

6. A welding clamp according to either of claims 4 and 5, **characterized in that** the mounting spindle of the cam (1) is formed by a pin (4) fixed to the lug of the required fixed arm (5) of the clamp.

7. A welding clamp according to any of claims 4 to 6, **characterized in that** the end (2a) of the connecting rod (2) cooperates with the cam (1) by way of a connecting part (7) fixed to the lower face of the cam (1) and having a spindle (6) on which the end (2a) is mounted rotatably.

8. A welding clamp according to any of claims 4 to 7, **characterized in that** the roller (3) is mounted fixed to the articulation of the clamp by way of a support of the indexing device, the axis of the roller (3) being parallel to the mounting spindle of the cam (1), the said roller (3) being able to roll along the profile of the cam (1) and the said roller (3) being further mounted slidably relative to its support, the sliding in translation being limited by an elastic restoring means.

9. A welding clamp according to any of claims 4 to 8, **characterized in that** the motor journal (8) is formed by a nut mounted slidably along a screw coupled to the reducer of the electric motor of the clamp.
